# EUROPEAN PATENT APPLICATION

(11) **EP 3 959 986 A1**
(43) Date of publication of application: **02.03.2022**
(21) Application number: 20795419.9
(22) Date of filing: 27.04.2020
(51) Int. Cl.: A23C 20/02

(54) **HARD CHEESE-LIKE COMPOSITION AND PRODUCTION METHOD THEREFOR**

(30) Priority: 26.04.2019 JP 2019085717
(71) Applicant: Ebisawa, Yasushi, Kobe-shi, Hyogo 658-0001 (JP)
(72) Inventor: YAMATO, Katsuro, Hyogo 650-0002 (JP)
(74) Representative: Eisenführ Speiser
(86) International application number: PCT/JP2020/017976
(87) International publication number: WO 2020/218611

(57) **Abstract**

Provided are: a cheese-like composition, which can have the same appearance, food texture (texture), and aroma and flavor (taste) as cheese without using cheese produced from milk or a dairy product; cheese substitute-containing food; and production methods therefor. Provided are: a hard cheese-like composition containing rice cake or rice, oil and fat, and any fermented food; cheese substitute-containing food containing said hard cheese-like composition; and a method for producing said hard cheese-like composition.

## Description

### Technical Field

The present invention relates to a hard cheese-like composition that contains rice cake or rice, oil and/or fat, and an optional fermented food. Specifically, the present invention relates to a hard cheese-like composition or a cheese substitute-containing food that basically does not contain cheese produced from milk or dairy product but has mouthfeel and aroma and flavor similar to those of hard cheese.

### Background Art

Cheese is a lactic acid fermented food that is made from milk or dairy product obtained from livestock such as cows, goats, or sheep, and is a food that is widely popular across the world. However, there are calls for cheese-like compositions and cheese-like foods having mouthfeel, aroma, and flavor similar to those of cheese from people who do not eat dairy products such as cheese for religious reasons, ideological reasons, and constitutional or health reasons such as allergy. As such cheese substitutes (so-called vegan cheese), substitutes that use fermented foods of soybeans and nuts, substitutes that use tofu and potato, and the like have been studied so far (for example, Patent Literatures 1 to 3 and the like). However, those are not capable of completely replicating cheese because those need to partly contain cheese and for other reasons. In addition, there are not a few cases where these foods cause other problems such as soybean allergy. Moreover, although cheese-like foods having a soft texture similar to cream cheese and spread-type cheese have been known so far, a substitute for hard cheese such as one that can be ground with a cheese grater or shredded (cut into slivers of cheese) has not known yet.

### Citation List

### Patent Literatures

Patent Literature 1: Japanese Patent Application Publication No. Sho 52-151760
Patent Literature 2: Japanese Patent Application Publication No. Sho 59-135838
Patent Literature 3: Japanese Patent Application Publication No. 2006-238882

### Summary of Invention

An object of the present invention is to provide a hard cheese-like composition and a cheese substitute-containing food that basically do not use cheese produced from milk or dairy product and can have an appearance, mouthfeel (texture), as well as aroma and flavor (eating quality) similar to those of hard cheese as well as methods for producing these.

As a result of earnestly studying in order to achieve the above object, the present inventors found that it was possible to provide a hard cheese-like composition and a cheese substitute-containing food that can achieve at least one of the above objects by using rice cake or rice, oil and/or fat, and an optional fermented food in combination instead of cheese. Specifically, the present invention may be as follows:
[1] A hard cheese-like composition comprising rice cake, a fermented food, and oil and/or fat.
[2] The hard cheese-like composition according to the above [1], wherein
   hardness measured by pressing a columnar jig having a test surface having a diameter of 5 mmcp into the hard cheese-like composition is 400 to 6000 g.
[3] The hard cheese-like composition according to the above [1] or [2], wherein
   the rice cake is rice cake obtained from rice selected from the group consisting of glutinous rice, non-glutinous rice, and mixed rice of these.
[4] The hard cheese-like composition according to any one of the above [1] to [3], wherein
   the fermented food is selected from the group consisting of fermented rice, sake lees, mirin lees, distilled spirit lees, natto, and miso.
[5] The hard cheese-like composition according to any one of the above [1] to [4], wherein
   the oil and/or fat is sunflower oil, rice oil, or palm oil.
[6] A cheese substitute-containing food comprising the hard cheese-like composition according to any one of the above [1] to [5].
[7] A method for producing a hard cheese-like composition, comprising:
   (1) a step of preparing a fermented food obtained by fermenting a raw material of the fermented food with a fermenting bacterium;
   (2) a step of mixing the fermented food, rice selected from the group consisting of glutinous rice, non-glutinous rice, and mixed rice of these, and oil and/or fat;
   (3) a step of heating a mixture obtained in (2) at 80 to 120°C for 5 to 30 minutes; and
   (4) a step of maintaining a mixture obtained in (3) at a low temperature of -5°C to 15°C for 1 to 7 days.
[8] The method for producing a hard cheese-like composition according to the above [7], wherein
   hardness of the hard cheese-like composition measured by pressing a columnar jig having a test surface having a diameter of 5 mmcp into the hard cheese-like composition is 400 to 6000 g.
[9] The method for producing a hard cheese-like composition according to the above [7] or [8], wherein
   the oil and/or fat is made into emulsified oil and/or fat containing the oil and/or fat, water, and an emulsifier and mixed.
[10] The method for producing a hard cheese-like composition according to any one of the above [7] to [9], wherein
   the low temperature maintaining step (4) is a step of maintaining the mixture at a low temperature of -5 to 0°C for 1 to 3 days.
[11] The method for producing a hard cheese-like composition according to any one of the above [7] to [10], wherein
   the fermented food is selected from the group consisting of fermented rice, sake lees, mirin lees, distilled spirit lees, natto, and miso.
[12] The method for producing a hard cheese-like composition according to any one of the above [7] to [11], wherein
   the oil and/or fat is sunflower oil, rice oil, or palm oil.

In addition, the present invention may be as follows.
<1> A hard cheese-like composition comprising rice cake and oil and/or fat.
<2> The hard cheese-like composition according to the above <1>, further comprising a fermented food.
<3> The hard cheese-like composition according to the above <1> or <2>, wherein
   hardness measured by pressing a columnar jig having a test surface having a diameter of 5 mmcp into the hard cheese-like composition is 400 to 6000 g.
<4> The hard cheese-like composition according to any one of the above <1> to <3>, wherein
   the rice cake is rice cake obtained from rice selected from the group consisting of glutinous rice, non-glutinous rice, and mixed rice of these.
<5> The hard cheese-like composition according to the above <2>, wherein
   the fermented food is selected from the group consisting of fermented rice, sake lees, mirin lees, distilled spirit lees, natto, and miso.
<6> The hard cheese-like composition according to any one of the above <1> to <5>, wherein
   the oil and/or fat is sunflower oil, rice oil, or palm oil.
<7> A hard cheese-like composition comprising rice and oil and/or fat.
<8> A cheese substitute-containing food comprising the hard cheese-like composition according to any one of the above <1> to <7>.
<9> A method for producing a hard cheese-like composition, comprising:
   (2) a step of mixing rice and oil and/or fat;
   (3) a step of heating a mixture obtained in the step (2); and
   (4) a step of maintaining a mixture obtained in the step (3) at a low temperature.
<10> The method for producing a hard cheese-like composition according to the above <9>, wherein
   the rice in the step (2) is selected from the group consisting of glutinous rice, non-glutinous rice, and mixed rice of these,
   the heating in the step (3) is performed at 80 to 120°C for 5 to 30 minutes, and
   the maintenance at a low temperature in the step (4) is performed at a temperature of -5°C to 15°C for 1 to 7 days.
<11> The method for producing a hard cheese-like composition according to the above <9> or <10>, comprising, before the step (2):
   (1) a step of preparing a fermented food obtained by fermenting a raw material of the fermented food with a fermenting bacterium, wherein
      in the step (2), the fermented food obtained in the step (1) is further mixed.
<12> The method for producing a hard cheese-like composition according to any one of the above <9> to <11>, wherein
   hardness of the hard cheese-like composition measured by pressing a columnar jig having a test surface having a diameter of 5 mmcp into the hard cheese-like composition is 400 to 6000 g.
<13> The method for producing a hard cheese-like composition according to any one of the above <9> to <12>, wherein
   the oil and/or fat is made into emulsified oil and/or fat containing the oil and/or fat, water, and an emulsifier and mixed.
<14> The method for producing a hard cheese-like composition according to any one of the above <9> to <13>, wherein
   the step (4) is a step of maintaining the mixture at a low temperature of -5 to 0°C for 1 to 3 days.
<15> The method for producing a hard cheese-like composition according to the above <11>, wherein
   the fermented food is selected from the group consisting of fermented rice, sake lees, mirin lees, distilled spirit lees, natto, and miso.
<16> The method for producing a hard cheese-like composition according to any one of the above <9> to <15>, wherein
   the oil and/or fat is sunflower oil, rice oil, or palm oil.

The present invention has made it possible to provide a hard cheese-like composition and a cheese substitute-containing food that basically do not use cheese produced from milk or dairy product and has at least one of appearance, mouthfeel (texture), and aroma and flavor (eating quality) similar to those of hard cheese, as well as methods for producing these. The hard cheese-like composition and the cheese substitute-containing food of the present invention are breakthrough products and/or food that can replicate cheese without using food materials such as soybeans and wheat, which often involve problems of allergy, and that allow people who cannot eat cheese for religious reasons, ideological reasons, or constitutional or health reasons to enjoy cheese-like foods.

### Description of Embodiments

The present invention relates to a hard cheese-like composition comprising: rice cake or rice, oil and/or fat, and an optional fermented food or a method for producing the same, and the like, which are described in detail below.

### <Hard Cheese-like Composition>

The "hard cheese-like composition" mentioned in the present invention is a hard cheese substitute that contains rice cake or rice, oil and/or fat, and an optional fermented food, is an analog of hard cheese, and can have aroma and flavor of cheese. The "hard cheese-like composition" is preferably a hard cheese-like composition having appropriate hardness of about 400 to 6000 g, and preferably 500 to 5000 g as measured by pressing a columnar jig having a test surface having a diameter of 5 mmcp into the hard cheese-like composition. More preferably, the "hard cheese-like composition" is a composition free of milk-derived components, that basically does not contain cheese (lactic acid fermented food) made from milk or dairy product obtained from livestock such as a cow, a goat, or sheep, that has appearance and mouthfeel (texture) of cheese replicated mainly using rice cake, and that has aroma and flavor (eating quality) of cheese replicated mainly using a fermented food. In the hard cheese-like composition of the present invention, the rice cake or rice is utilized to replicate the hardness of hard cheese. Specifically, glutinous grains and non-glutinous grains, which are raw materials of rice cake, particularly rice contains amylose and amylopectin, and a phenomenon in which water separates from rice (dewatering) and rice cake is hardened by a so-called aging phenomenon of amylose and amylopectin is utilized. In order to swiftly harden rice cake using the aging phenomenon, non-glutinous rice, which contains a plenty of amylose, is advantageous. However, in the case of obtaining a soft cheese-like composition by reheating the hard cheese-like composition of the present invention or by other methods, glutinous rice is preferably used because it can replicate softness and extension like cheese when heated as compared with the case of using non-glutinous rice.

Regarding the contents of the rice cake or rice, the optional fermented food, and the oil and/or fat in the hard cheese-like composition of the present invention, when the content of the hard cheese-like composition is considered as 100% by mass, the content of the rice cake or rice (standard content of rice: an amount based on the amount of rice used to make rice cake) is an amount of, for example, 10 to 40% by mass, preferably 15 to 30% by mass, and more preferably 18 to 20% by mass in terms of rice or the amount of rice cake made from the rice in the amount, the content of the optional fermented food is, for example, 0.1 to 10% by mass, preferably 0.5 to 5% by mass, and more preferably 1 to 3% by mass, the content of the oil and/or fat is, for example, 5 to 50% by mass, preferably 10 to 40% by mass, and more preferably 20 to 30% by mass, and the content of water is, for example, 5 to 50% by mass, preferably 10 to 45% by mass, and more preferably 20 to 40% by mass. The mass ratio of the rice cake or rice (standard content of rice)/the oil and/or fat in the hard cheese-like composition is, for example, 0.3 to 2, preferably 0.5 to 1.5, and more preferably 0.7 to 1. The mass ratio of the rice cake or rice (standard content of rice)/the fermented food in the hard cheese-like composition is, for example, 1 to 20, preferably 5 to 15, and more preferably 10 to 12. Note that in the process in which the ingredients are hardened to the hard cheese-like composition in the present invention is caused by the aging phenomenon of starchy materials such as amylose and amylopectin as described above, and accordingly, there is no change between the amount of each ingredient in the production of the hard cheese-like composition and the amount of the corresponding component in the hard cheese-like composition thus obtained, and these amounts can be substantially equal.

The "rice cake" mentioned in the present invention is made from a granular or powdery glutinous grain or non-glutinous grain such as rice, foxtail millet, or proso millet which becomes sticky when kneaded, and refers to what is obtained by steaming these materials with water vapor or adding hot water to these materials, followed by kneading, and pounding these in a mortar or the like as necessary. The raw material of the glutinous grain or non-glutinous grain is preferably glutinous rice, non-glutinous rice, and mixed rice of these. When glutinous rice is used, rice cake obtained by steaming granular glutinous rice and pounding the steamed glutinous rice with a pestle, or rice cake obtained by conducting these steps with compatible devices (for example, kneading with a kneader and heating with water vapor) is preferable. In the hard cheese-like composition and the cheese substitute-containing food of the present invention, the "rice cake" is present as rice cake that is not in a soft state but is hardened with aging. However, in the production method, the "rice cake" may be obtained by mixing rice cake made initially with another component, or may be made into rice cake in the middle of the production method.

The "rice" mentioned in the present invention may be rice selected from the group consisting of glutinous rice, non-glutinous rice, and mixed rice of these. In addition, the "rice cake" may be rice cake obtained from rice selected from the group consisting of these glutinous rice, non-glutinous rice, and mixed rice of these. Here, the "glutinous rice" and "non-glutinous rice" may be Japonica or Indica, wet or dry "glutinous rice" and "non-glutinous rice". In addition, the "glutinous rice" and "non-glutinous rice" may be polished or not (brown rice) and may be granular as it is or powdery. Powdery rice includes joshinko (obtained by washing non-glutinous rice with water and drying the washed non-glutinous rice and powdered), shiratamako (obtained by washing glutinous rice with water and immersing the washed glutinous rice in water, and powdering the immersed glutinous rice, followed by precipitation), mochiko (obtained by washing glutinous rice with water, drying the washed glutinous rice, and powdering the dried glutinous rice). Note that glutinous rice contains only amylopectin as most of starch contained in the rice while non-glutinous rice contains amylose (about 20% by mass) in addition to amylopectin (about 80% by mass) as starch composing the rice.

As the "rice", one or a plurality of types of rice may be used. In a case where a plurality of types of rice are used, it is appropriate that the mixing ratio (mass ratio) of glutinous rice:non-glutinous rice is, for example, 10:90 to 90:10, preferably 20:80 to 80:20, more preferably 30:70 to 70:30, and further preferably 40:60 to 60:40, including the case of using mixed rice of glutinous rice and non-glutinous rice as raw materials of the "rice cake".

In the present invention, as a flavoring agent for flavoring the hard cheese-like composition, a fermented food, a condiment, an acidulant, a flavor, or the like may be optionally added, and preferably, a fermented food may be contained. The "fermented food" mentioned in the present invention is selected from the group consisting of fermented rice, sake lees, mirin lees, distilled spirit lees, natto, and miso. The fermented food is more preferably a rice-derived fermented food obtained by fermenting rice as a raw material of the fermented food, such as fermented rice, sake lees, mirin lees, and distilled spirit lees derived from rice. Without being bound to theory, using a rice-derived fermented food improves the taste, flavor, and smoothness during eating of the hard cheese-like composition and the cheese substitute-containing food somehow because a rice-derived fermented food is compatible with rice cake also made from rice, and the rice cake and the fermented food are well blended and can be uniformly mixed and integrated.

The "fermented rice" mentioned in the present invention is obtained by fermenting non-glutinous rice or glutinous rice with a fermenting bacterium. Here, the "non-glutinous rice" and the "glutinous rice" are as described above. The "sake lees" mentioned in the present invention mean a solid product that remains after squeezing Japanese sake in the steps of producing Japanese sake.

The "mirin lees" mean a solid product that remains after mirin is obtained in the steps of producing mirin. The "distilled spirit lees" mean a solid product that remains after a distilled spirit is obtained in the steps of producing a distilled spirit (including awamori). The raw material of the distilled spirit includes raw materials of distilled spirit such as rice, sweet potato, barley and wheat, and buckwheat, and distilled spirit lees derived from rice are preferable. The raw material of the "natto" includes soybeans. As the "miso", rice miso, barley miso, white miso, red miso, and the like may be used. These fermented foods are preferably in the form of powder from the viewpoint of dispersibility, and for example, powdered fermented rice and powdered sake lees are preferably utilized.

The fermentation of the above-described fermented food is performed by a fermenting bacterium selected from the group consisting of koji bacteria, yeast bacteria, acetic acid bacteria, natto bacteria, and lactic acid bacteria, for example. Although the fermenting bacterium is used to prepare a fermented food, the fermenting bacterium may be used, for example, in the state of bacterium-containing composition containing the fermenting bacterium, that is obtained after rice is fermented by the fermenting bacterium, like sake lees (containing koji bacteria and yeast bacteria). The fermenting bacterium may be in the form of a solid such as a lump or a powder or a liquid such as a solution or a suspension. The fermenting bacterium may be one type or a mixture of a plurality of types.

The "oil and/or fat" mentioned in the present invention is a term that means both of a fat which is a solid in room temperature (for example: fat of meat, lard, and the like) and an oil which is a liquid in room temperature (for example: corn oil, soybeans oil, and the like). Cheese generally contains oil and/or fat in an amount of about 1/3 of the entire mass. Adding oil and/or fat to a hard cheese-like composition and a cheese substitute-containing food allows these hard cheese-like composition and cheese substitute-containing food to sufficiently extend when heated (improve the extendability) to achieve a "extendable" texture and appearance similar to cheese. As the oil and/or fat of the present invention, vegetable oil and/or fat obtained from a vegetable raw material is preferably used because the hard cheese-like composition of the present invention preferably contains only a vegetable component and does not contain an animal component.

The major component of the oil and/or fat may be a triglyceride in which a fatty acid binds to glycerin. Such a fatty acid includes, for example, a monovalent saturated or unsaturated carboxylic acid having a short-chain hydrocarbon having about 2 to 4 carbon atoms (short-chain fatty acid), a monovalent saturated or unsaturated carboxylic acid having a middle-chain hydrocarbon having about 5 to 12 carbon atoms (middle-chain fatty acid), and a monovalent saturated or unsaturated carboxylic acid having a long-chain hydrocarbon having more than 12 carbon atoms (long-chain fatty acid). The oil and/or fat may be natural oil and/or fat or synthetic oil and/or fat or a mixture of various oils and/or fats. The natural oil and/or fat includes, for example, flaxseed oil, safflower oil, grapeseed oil, soybeans oil, sunflower oil, corn oil, sesame oil, rapeseed oil, rice oil, peanut oil, olive oil, palm oil, palm kernel oil, and castor oil. The oil and/or fat of the present invention may preferably be natural oil and/or fat such as sunflower oil, rice oil, or palm oil or synthetic oil and/or fat such as a triglyceride of a middle-chain fatty acid having 8 to 12 carbon atoms.

The oil and/or fat of the present invention may be in any form of liquid oil and/or fat, solid oil and/or fat, and powder oil and/or fat at room temperature. In a case where the oil and/or fat is mixed with rice cake or a fermented food as it is, a powder oil and/or fat is preferable, while in the case where the oil and/or fat is used as emulsified oil and/or fat, liquid oil and/or fat is preferable.

The oil and/or fat of the present invention may be mixed as it is with rice cake or rice, a fermented food, and the like, but may be made into emulsified oil and/or fat containing the oil and/or fat and mixed with rice cake or a fermented food in order to prevent the oil and/or fat from separating from the rice cake or rice. Specifically, emulsified oil and/or fat obtained by mixing oil and/or fat with water in the presence of an emulsifier may be utilized as the "oil and/or fat" of the present invention. Here, the emulsifier includes, for example, processed starch (obtained by physically, chemically, or enzymatically processing starch, for example, starch sodium octenyl succinate), glycerin fatty acid esters, sorbitan fatty acid esters, propylene glycol fatty acid esters, sucrose fatty acid esters, lecithin, and casein sodium.

To the emulsified oil and/or fat, an extender or an excipient may be further added, and dextrin can preferably be added. Dextrin functions as an extender for the emulsified oil and/or fat, and also has an advantage that dextrin allows the components forming the emulsified oil and/or fat to uniformly mix, and contributes to the dispersibility of each component.

In the case of using emulsified oil and/or fat as the oil and/or fat, when the total amount of the ingredients in producing the hard cheese-like composition is considered as 100% by mass, the content of the oil and/or fat is, for example, 5 to 50% by mass, preferably 10 to 40% by mass, and more preferably 20 to 30% by mass, the content of the emulsifier is, for example, 0.5 to 20% by mass, preferably 1 to 10% by mass, and more preferably 2 to 7% by mass, the content of the extender (dextrin or the like) is, for example, 1 to 20% by mass, preferably 3 to 16% by mass, and more preferably 5 to 14% by mass, the content of water may be, for example, 70 to 98% by mass, preferably 75 to 95% by mass, more preferably 80 to 90% by mass, and particularly preferably 87% by mass±1 to 2% by mass relative to the entire amount of water used to produce the hard cheese-like composition, for example, and the content of water used to prepare the emulsified oil and/or fat is, for example, 4 to 45% by mass, preferably 8 to 40% by mass, and more preferably 17 to 35% by mass. The mass ratio of the oil and/or fat/water in the emulsified oil and/or fat is, for example, 0.2 to 2.3, preferably 0.4 to 1.7, and more preferably 0.7 to 0.9.

The hard cheese-like composition of the present invention may further contain an optional component, for example, a condiment, an acidulant, a stabilizer, a coloring agent, a solvent, a binder, a flavor, and the like.

The condiment includes, for example, common salt, sugar, hydrolyzed proteins, yeast extract, and amino acids (monosodium glutamate and the like).

The acidulant includes, for example, organic acids such as citric acid, tartaric acid, lactic acid, acetic acid, and malic acid, juices such as lemon juice, and vinegars such as rice vinegar and apple vinegar.

The stabilizer includes, for example, guar gum, xanthan gum, carrageenan, and locust bean gum.

The coloring agent includes, for example, palm oil carotene, carrot carotene, paprika color, and synthetic coloring agent.

The flavor includes, for example, a flavor that can add a cheese flavor, for example, cheese oil, Cheddar cheese oil, cream cheese oil, Camembert oil, and Edam oil, and other flavors, for example, fatty acids such as butyric acid.

The solvent includes, for example, water.

When the hard cheese-like composition is considered as 100% by mass, the amount of optional components except the solvent is, for example, 0.1 to 20% by mass, preferably 0.5 to 10% by mass, and more preferably 1 to 5% by mass. When the total amount of the ingredients in producing the hard cheese-like composition is considered as 100% by mass, the amount of the solvent is, for example, 10 to 60% by mass, preferably 20 to 50% by mass, and more preferably 30 to 40% by mass.

Here, "cheese" is generally a lactic acid fermented food made from milk or dairy product obtained from livestock such as cow, goat, or sheep as a raw material, and more specifically, refers to "natural cheese" and "processed cheese" defined in Article 2, Sections 16 to 18 of Ministerial Ordinance Concerning Compositional Standards, etc. for Milk and Milk Products under the Food Sanitation Law. Article 2, section 17 of the Ministerial Ordinance states that "natural cheese" means the following products. (1) The products which are made by removing part of whey from the curd obtained by coagulating almost all or part of proteins of milk, buttermilk (means the part other than fat globules obtained during the manufacturing of butter; same below), cream or their mixture with enzyme or other coagulants, or the product made by ripening it. (2) Besides the products given in (1), the products made by techniques including coagulation of protein of milk, etc. as the raw material and having the chemical, physical and organoleptical characteristics similar to those given in (1), and Article 2, section 17 states that "processed cheese" means the product which is made from natural cheese by grinding, heating to melt, and emulsifying.

The "(hard) cheese-like composition" and the "cheese substitute-containing food" in the present invention are a composition that serves as a substitute for such cheese and a food containing the cheese-like composition, and specifically, a composition and a food that basically do not contain cheese produced from a dairy product or the like, contain rice cake or rice, a fermented food (optional), and oil and/or fat, preferably only ingredients derived from rice as the rice cake, the fermented food, and the oil and/or fat, and replicate at least one of appearance, mouthfeel (texture), and aroma and flavor (eating quality) of cheese. Such a (hard) cheese-like composition and cheese substitute-containing food of the present invention is a composition and a food that does not contain cheese and also exclude allergic substances, and have favorable storability (about 6 to 12 months when stored in a refrigerator) different from cheese which easily decays because cheese uses milk or the like as a raw material. In particular, the "(hard) cheese-like composition" and the "cheese substitute-containing food" in the present invention are preferably a composition that serves as a substitute for natural cheese and a food containing the (hard) cheese-like composition.

The "hard cheese-like composition" of the present invention is an analog of hard cheese, that does not use milk or dairy product and is made from plant ingredients, and is also called vegan cheese. Specific hard cheese-like composition includes, for example, hard cheese-like compositions imitating Parmigiano-Reggiano, Pecorino Romano, Mimolette, Raclette, Edam, Emmental, Grana Padano, Gruyere, Conte, Cheddar, and the like. The hard cheese-like composition of the present invention is a lump of normally 1 to 20 kg, and preferably 1.5 to 3 kg, and normally has a columnar shape having a diameter of 18 cm±10 cmcp and a height of 6 cm±5 cm, or a shape obtained by dividing the columnar shape into 1/2 to 1/16. Moreover, the hard cheese-like composition in lump form may be processed into a cuboid (shredded piece) of about 50 mm×10 mm×2 mm, or may be further finely processed into a powder.

The "hard cheese-like composition" of the present invention basically does not contain cheese (cheese content of 0% by mass), but may contain some cheese, and for example may contain cheese in an amount of less than 50% by mass, preferably 49% by mass or less, more preferably 40% by mass or less or 30% by mass or less, further preferably 20% by mass or less or 10% by mass or less, particularly preferably 5% by mass or less or 2% by mass or less, most preferably 1% by mass or less or 0.5% by mass or less relative to the hard cheese-like composition.

The "hard cheese" in the present invention means cheese that is different from soft cheese or semi-hard cheese and that has hardness enough to be processed into shreds for example, and also means cheese that can be ground using a cheese grinder. Specifically, as also explained in Examples, it is appropriate that the hardness measured by pressing a columnar jig having a test surface having a diameter of 5 mmcp into the hard cheese-like composition is for example 400 to 6000 g, preferably 500 to 5000 g, more preferably 700 to 4500 g, further preferably 1000 to 4000 g, and particularly preferably 1500 to 3500 g. In the case of a hard cheese-like composition that can be shredded, it is appropriate that the hardness is for example 400 to 3000 g, and preferably 500 to 2500 g, and in the case of a hard cheese-like composition that can be ground, it is appropriate that the hardness is 1500 g to 5000 g, preferably 2000 to 4500 g, and more preferably 2400 to 4000 g. More specifically, a columnar jig having a test surface having a diameter of 5 mmcp and a length of about 30 to 70 mm is dropped at a speed of 2.0 mm/sec against the surface of a test target having a surface of 35 mm×35 mm and a height of 20 mm, which serves as the test target, and pressed into the test target, and the load when the jig reaches a middle position (10 mm) of the test target in the height direction is measured as hardness. Normally, the measurement is performed 3 to 5 times, and an average value of the measured values may be employed. Moreover, the hardness of hard cheese can also be specified using a rheometer based on JIS K 6503.

The "cheese substitute-containing food" is a food that contains the above-described hard cheese-like composition. It is appropriate that in the cheese substitute-containing food, the aforementioned hard cheese-like composition is contained in an amount of, for example, more than 50% by mass, preferably 51% by mass or more, more preferably 60% by mass or more or 70% by mass or more, further preferably 80% by mass or more or 90% by mass or more, particularly preferably 95% by mass or more or 98% by mass or more, and most preferably 99% by mass or more or 99.5% by mass or more relative to the food.

The (hard) cheese-like composition and the cheese substitute-containing food of the present invention may be ate as it is as a hard cheese substitute, or may be ground with a cheese grinder or the like or shredded with a cheese shredder or the like, and may further be heated and melted as appropriate for eating. The applications of the (hard) cheese-like composition and the cheese substitute-containing food of the present invention include, for example, pizza, gratin, doria, pasta, risotto, fondue, sandwich, bread, sweets such as cakes, confectionery such as cookies and snacks, and beverages such as cheese tea.

### <Method for Producing Hard Cheese-like Composition>

The present invention also relates to a method for producing a hard cheese-like composition, comprising the following steps:
(1) an optional step of preparing a fermented food obtained by fermenting a raw material of the fermented food with a fermenting bacterium;
(2) a step of mixing rice, more preferably rice selected from the group consisting of glutinous rice, non-glutinous rice, and mixed rice of these, and oil and/or fat, and optionally the fermented food;
(3) a step of heating a mixture obtained in the step (2); and
(4) a step of maintaining a mixture obtained in the step (3) at a low temperature.

Hereinafter, the above-described steps (1) to (4) are described in detail. Note that the definitions of terms such as "fermented food", "fermenting bacterium", "rice", "non-glutinous rice", and "glutinous rice" in each step are as defined above unless otherwise stated.

### (1) An optional step of preparing a fermented food obtained by fermenting a raw material of the fermented food with a fermenting bacterium

Here, the "raw material of the fermented food" is a raw material used for obtaining a fermented food, and may be the above-described non-glutinous rice and glutinous rice in the case of using fermented rice, sake lees, or mirin lees as a fermented food, and may be raw materials of distilled spirit such as sweet potato, barley and wheat, buckwheat, and the like besides rice in the case of using distilled spirit lees as a fermented food, and may be soybeans in the case of using natto as a fermented food. These raw materials of the fermented food are fermented with a fermenting bacterium using a publicly-known method to prepare a fermented food. In addition, a commercially available fermented food such as a sake lees powder (Riken Vitamin Co., Ltd., SYUKA NO HANA (registered trademark)) can also be utilized.

### (2) A step of mixing rice, more preferably rice selected from the group consisting of glutinous rice, non-glutinous rice, and mixed rice of these, and oil and/or fat, and optionally the fermented food

In step (2), rice and oil and/or fat are mixed. A glutinous grain or non-glutinous grain other than rice may be mixed, and further in the case where there is a fermented food prepared in the above-described optional step (1), the fermented food may be mixed together with rice and oil and/or fat. As a mixing method, a publicly-known mixing method may be used. Specifically, it is appropriate to mix these ingredients while agitating with a mixer such as a homomixer or a homogenizer to emulsify the mixture. As mixing conditions, publicly-known conditions may be used, and may be, for example, about 30 seconds to 60 minutes, preferably about 40 seconds to 30 minutes, and more preferably about 1 to 20 minutes, and the temperature may be selected from room temperature ("a temperature not exceeding ambient temperature" defined in the Food Sanitation Law or 20°C±15°C defined in JIS Z 8703) or temperatures of about 0 to 100°C. The agitating speed of the homogenizer or the like for emulsification is, for example, 10 to 500 rpm, preferably 20 to 300 rpm, and more preferably 25 to 100 rpm.

As the oil and/or fat added in step (2), oil and/or fat itself may be used as it is. For example, in the case of using liquid oil and/or fat, emulsified oil and/or fat obtained by mixing the oil and/or fat and water in the presence of an emulsifier may be used. Emulsified oil and/or fat is prepared by mixing oil and/or fat, water, and an emulsifier while agitating with a homomixer, a homogenizer, or the like. As the conditions under which to prepare emulsified oil and/or fat, publicly-known conditions may be used, and may be, for example, about 1 to 60 minutes, preferably about 5 to 30 minutes, and more preferably about 10 to 20 minutes, and the temperature may be selected from room temperature ("a temperature not exceeding ambient temperature" defined in the Food Sanitation Law or 20°C±15°C defined in JIS Z 8703) or temperatures of about 0 to 100°C. The agitating speed of the homogenizer or the like to prepare emulsified oil and/or fat is a speed faster than the above-described mixing speed for the fermented food and rice and oil and/or fat, for example, 50 to 300 rpm, preferably 70 to 200 rpm, and more preferably 80 to 150 rpm. For the above-described mixing of the fermented food and rice and oil and/or fat and the preparation of emulsified oil and/or fat, the same mixing device such as a homomixer or a homogenizer is preferably used. In the case where the same mixing device is used, it is appropriate that the agitating speed for preparing emulsified oil and/or fat is lower than the agitating speed for mixing the fermented food and rice and oil and/or fat by, for example, about 10 to 100 rpm, preferably 30 to 70 rpm.

The ratio of ingredients such as emulsified oil and/or fat, rice cake, rice, and the fermented food used herein may be within a range in accordance with the ratio of ingredients in the above-described hard cheese-like composition, which is the final product. For example, in the case where the total amount of the ingredients is considered as 100% by mass, the content of the rice cake or rice (standard content of rice: an amount based on the amount of rice used for making rice cake) is, for example, the amount of rice cake made from rice in an amount of 5 to 50% by mass, preferably 10 to 40% by mass, and more preferably 15 to 30% by mass, the content of the fermented food is, for example, 0.05 to 10% by mass, preferably 0.1 to 10% by mass, and more preferably 0.5 to 5% by mass, and the content of the oil and/or fat is, for example, 1 to 60% by mass, preferably 5 to 45% by mass, and more preferably 10 to 30% by mass. The mass ratio of the rice cake or rice (standard content of rice)/the oil and/or fat in the ingredients is, for example, 0.3 to 2, preferably 0.5 to 1.5, and more preferably 0.7 to 1. The mass ratio of the rice cake or rice (standard content of rice)/the fermented food in the ingredients is, for example, 1 to 20, preferably 5 to 15, and more preferably 10 to 12.

### (3) A step of heating a mixture obtained in the above-described step (2)

The mixture obtained in the above-described step (2) is further heated. It is appropriate that the mixture is heated at, for example, 80 to 120°C, preferably 90 to 110°C, more preferably 95 to 100°C, and particularly preferably 100°C and for, for example, 5 to 30 minutes, preferably 7 to 20 minutes, and more preferably 10 to 15 minutes. In this step (3), the rice is gelatinized, so that rice cake is formed. Preferably, the heating in this step (3) may be performed using water vapor while kneading (steam kneading). Rice is sufficiently heated by the heating using water vapor, the gelatinized rice is integrated by the kneading, making it easier for rice cake to be formed.

### (4) A step of maintaining a mixture obtained in the above-described step (3) at a low temperature

By this low temperature maintaining step, the rice cake is hardened due to the aforementioned aging phenomenon of the rice cake. Although it is normally said that aging proceeds only at a temperature exceeding 0°C, it was revealed in the present invention that since freezing-point depression occurs due to the presence of the rice cake (solid product), and the freezing point of water becomes lower than 0°C, so that aging proceeds even at a temperature of -5°C to 0°C, for example, and the hard cheese-like composition can be swiftly obtained. The low temperature maintaining step is performed, for example at a temperature of -5°C to 15°C for 1 to 7 days, preferably at a temperature of -5°C to 10°C for 2 to 6 days, and more preferably at a temperature of -3°C to 5°C for 2 to 5 days, or as another aspect, may be performed at a temperature of -5°C to 0°C or -5°C to -1°C for 1 to 3 days or at a temperature of 0 to 15°C or 5°C to 10°C for 5 to 7 days.

The present invention relates to a method for producing a cheese substitute-containing food, optionally comprising, besides the above-described steps (1) to (4):
(5) a step (optional step) of adding a flavor to a mixture subjected to steam kneading in the above-described step (3), followed by kneading (for example, for 1 to 10 minutes, and preferably 2 to 8 minutes); and
(6) a step of adding the hard cheese-like composition of the invention of the present application obtained by the above-described steps (1) to (4) and optional step (5) to a target food.

In the case of using a flavor as in step (5), it is preferable to perform kneading without using water vapor after addition of the flavor. Performing kneading without using water vapor makes it possible to surely add aroma to the hard cheese-like composition without the flavor sublimating. It is appropriate that the step of performing kneading without using water vapor is performed, for example, by heating while agitating at a temperature lower than the heating using water vapor by about 1 to 10°C, for example at 70 to 110°C, and preferably 80 to 90°C, for 1 to 10 minutes, and preferably 2 to 8 minutes.

Here, the "target food" includes, for example, pizza, gratin, doria, pasta, risotto, fondue, sandwich, bread, sweets such as cake, confectionery such as cookies and snacks, and beverages such as cheese tea before adding cheese. Moreover, the "target food" may be a cheese substitute itself, and for example, in the case of producing Mimolette as the cheese substitute-containing food, it is possible to obtain a cheese substitute (Mimolette substitute) by adding an orange natural dye or the like to the hard cheese-like composition of the present invention.

Hereinafter, the present invention is described in detail using Examples and Comparative Example; however, it is not intended that the present invention is limited to Examples and Comparative Example below.

### Examples

### <Samples>

As Test Samples of the present invention, the following samples were prepared. Note that Control Sample 1 is Comparative Example that did not satisfy the requirements of the present invention.

### • Test Sample 1

Processed starch as an emulsifier, water (87% by mass relative to the amount (100% by mass) of water used as an ingredient), palm oil as oil and/or fat, and dextrin as an extender were added into a homomixer (manufactured by Primix Corporation, model MARKII 2.5) in a ratio shown in Table 1, followed by mixing at 20°C for 10 minutes at 1000 rpm to prepare emulsified oil and/or fat. A rice flour (glutinous brown rice powder, manufactured by Gunmaseifun Flour Milling Co., Ltd.) as rice cake, sake lees (sake lees powder, manufactured by Riken Vitamin Co., Ltd., SYUKA NO HANA (registered trademark)) as a fermented food, and the balance of water, common salt, citric acid, and guar gum were introduced into a steam kneader (manufactured by Watanabe KK, NERIRAKU WK-J807) in a ratio shown in Table 1, followed by mixing and agitating at 30°C for 1 minute at 35 rpm. Thereafter, heating was performed while kneading using water vapor at a temperature of 100°C in the steam kneader for 12 minutes (the temperature was reached to 100°C after 3 minutes). The water vapor was at 103°C and used under conditions of a pressure of 0.1 MPa, and a flow rate of 120 kg/hour. Thereafter, the obtained mixture was maintained at a low temperature of -1°C for 3 days to obtain a hard cheese-like composition (Test Sample 1), which was the final product.

### • Test Samples 2 to 7

Test Samples 2 to 7 were prepared in the same manner as in Test Sample 1 except that a mixture of the rice flour (glutinous brown rice powder) and joshinko in a mass ratio of 50:50 was used instead of the rice flour (glutinous brown rice powder) for Test Sample 2, except that joshinko was used instead of the rice flour (glutinous brown rice powder) for Test Sample 3, except that mirin lees was used as a fermented food instead of the sake lees powder for Test Sample 4, except that white miso was used as a fermented food instead of the sake lees powder for Test Sample 5, except that a fermented food was not used for Test Sample 6, and except that oil and/or fat (palm oil) was not used for Test Sample 7. Note that since Test Samples 6 and 7 did not contain a fermented food or oil and/or fat, these were reference samples for the invention of the present application. The ratios of components in Test Samples 6 and 7 were different because a fermented food and oil and/or fat were not used, but the absolute amount of the components were equal to that of Test Sample 1.

### • Control Sample 1

As Control Sample 1, a natural cheese (containing 150 g of Hokkaido Mix Cheese) manufactured by Chiba Meiji Milk Products Co., Ltd. was utilized.

Components used as ingredients and ratios thereof are shown in Table 1. In addition, where the components were obtained are shown blow.
• Glutinous brown rice powder (Gunmaseifun Flour Milling Co., Ltd., glutinous brown rice powder)
• Joshinko (Namisato Corporation, soft joshinko)
• Sake lees powder (Riken Vitamin Co., Ltd., SYUKA NO HANA (registered trademark))
• Mirin lees (Kingjyouzou Co., Ltd.)
• White miso (Kaneko Miso Co., Ltd., white miso)
• Palm oil (Fuji Oil Co., Ltd, purified palm oil)
• Processed starch (Matsutani Chemical Industry Co., Ltd., EMARUSUTA (Registered Trademark))
• Dextrin (Matsutani Chemical Industry Co., Ltd., Pinedex (registered trademark))
• Guar gum (Sansho Co., Ltd., GUAPAKKU PF20 (registered trademark))

**Table 1: Test Sample 1**

| Component Name | Classification | Percentage Relative to the Total Amount of Ingredients (% by mass) |
|---|---|---|
| Glutinous Brown Rice Powder | Raw Material of Rice Cake | 18.95 |
| Sake Lees Powder | Fermented Food | 1.68 |
| Processed Starch | Emulsifier (Emulsified Oil and/or Fat) | 4.4 |
| Dextrin | Extender (Emulsified Oil and/or Fat) | 9.5 |
| Palm Oil | Oil and/or Fat (Emulsified Oil and/or Fat) | 25.9 |
| Water | Total Amount: Percentage for Emulsified Oil and/or Fat): | 38 (Percentage: 87%) |
| Common Salt | Condiment | 1.1 |
| Citric Acid | Acidulant | 0.17 |
| Guar Gum | Stabilizer | 0.3 |

### <Sensory Test>

The above-described Test Samples 1 to 7 and Control Sample 1 were subjected to a sensory test. In the sensory test, 10 panelists in total composed of 5 males and 5 females evaluated the appearance, the mouthfeel, and the eating quality of each Test Sample as compared with Control Sample.

Specifically, after a toaster oven of 800 w was preheated, each Test Sample was heated and dissolved in the toaster oven for 1 minute and 30 seconds (a sample temperature of about 73.7°C) to make samples for sensory test. Each sample was compared in terms of color tone, gloss, discoloration, presence or absence of deformation, and presence or absence of dissolution as appearance (all before the heating and dissolution with the toaster oven), and compared in terms of crumbliness, hardness, and glutinosity as mouthfeel (all after the heating and dissolution with the toaster oven), and compared in terms of rancidness, decay, savoriness, and presence or absence of off-taste off-odor as eating quality (all after the heating and dissolution with the toaster oven). The evaluation was made by the following 5-point scale based on Control Sample 1 (the difference in evaluation between scales was discussed and determined by the panelists), and average values of values made by all the panelists are shown in Table 2.
5: equivalent to Control Sample 1
4: slightly different from Control Sample 1
3: different from Control Sample 1 but with no problem
2: inferior to Control Sample 1
1: very inferior to Control Sample 1 (out of question)

The results of the sensory test are summarized in Table 2.

**Table 2: Sensory test**

| | Appearance | Mouthfeel | Eating Quality |
|---|---|---|---|
| Test Sample 1 | 3.6 | 4.8 | 4.8 |
| Test Sample 2 | 3.3 | 3.9 | 3.7 |
| Test Sample 3 | 3.6 | 3.7 | 3.5 |
| Test Sample 4 | 3.1 | 3.1 | 3.1 |
| Test Sample 5 | 3.3 | 3.9 | 3.7 |
| Test Sample 6 | 2.5 | 2.1 | 2.6 |
| Test Sample 7 | 3.1 | 2.8 | 1.9 |
| Control Sample 1 | 5.0 | 5.0 | 5.0 |

### <Test Samples 1-1 to 6 for Low-temperature Maintenance Test>

Test Samples for low-temperature maintenance test were prepared as follows: the above Test Sample 1 was used as Test Sample 1-3 for low-temperature maintenance test, and Test Samples 1-1, 1-2, and 1-4 to 6 for low-temperature maintenance test were obtained in the same manner as in Test Sample 1 except that mixtures obtained after the heating during the production steps of Test Sample 1 were maintained at low temperatures, that is, the corresponding cold holding temperatures shown in Table 3 for certain periods of time to obtain hard cheese-like compositions, which were the final products. The low-temperature maintenance period was set to a period that allowed the hardening to sufficiently proceed so that the hard cheese-like compositions had such hardness that the hard cheese-like compositions were able to be shredded (cut into slivers of cheese). Note that 1 day means 24 hours.

**Table 3: Low-temperature maintenance test**

| | Cold Holding Temperature | Low-temperature Maintenance Period |
|---|---|---|
| Test Sample 1-1 for Low-temperature Maintenance Test | -5°C | 2 Days |
| Test Sample 1-2 for Low-temperature Maintenance Test | -3°C | 2 Days |
| Test Sample 1-3 for Low-temperature Maintenance Test | -1°C | 2 Days |
| Test Sample 1-4 for Low-temperature Maintenance Test | 5°C | 5 Days |
| Test Sample 1-5 for Low-temperature Maintenance Test | 10°C | 6 Days |
| Test Sample 1-6 for Low-temperature Maintenance Test | 25°C | Not Hardened Even After 7 Days |

### <Test Samples 1-1 to 7 for Hardness Test>

Test Samples for hardness test were prepared as follows: the above-described Test Sample 1 was used as Test Sample 1-3 for hardness test, and Test Samples 1-1, 1-2, and 1-4 to 6 for hardness test were obtained in the same manner as in Test Sample 1 except that the amounts of water added relative to the total amount of ingredients were changed as in "Water Content" of Table 5 (the absolute amount of the ingredients other than water was not changed) during the production steps of Test Sample 1. The hardness was measured in accordance with the following hardness test. In addition, the above-described sensory test was repeated, and the evaluation is shown in Table 4. Moreover, the ratio of the ingredients used in each Test Sample for hardness test is shown in Table 5 and Table 6.

### <Hardness Test>

A columnar jig having a test surface having a diameter of 5 mmcp and a length of 52.5 mm was dropped at a speed of 2.0 mm/sec against the surface of a substantially cuboid test target having a square surface of 35 mm×35 mm and a height of 20 mm, which served as the test target, and pressed into the test target, and the load when the jig reached a middle position (10 mm) of the test target in the height direction was measured as hardness. The measurement was performed 3 times, and an average value of the measured values was employed. The test target used in the measurement was used after 14 days from the production. The test results are as shown in Table 4. In addition, the details of the test equipment are as follows.
Test equipment: manufactured by Staple Micro Systems, Texture Analyser TA..XT Plus
Setting of measurement condition: Compression test Jig speed at the measurement: 2.0 mm/sec
Jig: a columnar shape having a diameter of 5 mmcp and a length of 52.5 mm
Test Sample: a cuboid having a length of 35 mm. a width of 35 mm, and a height of 20 mm

**Table 4: Hardness test and sensory test**

| Test Sample for Hardness Test | Amount of Water Added Relative to Total Amount of Ingredients (% by Mass) | Hardness (g) | Appearance | Mouthfeel | Eating Quality |
|---|---|---|---|---|---|
| 1-1 | 48% by mass | 621.2 g | 4.0 | 4.1 | 4.1 |
| 1-2 | 40% by mass | 601.6 g | 4.0 | 4.1 | 4.1 |
| 1-3 | 38% by mass | 738.6 g | 3.6 | 4.8 | 4.8 |
| 1-4 | 30% by mass | 2896.6 g | 4.1 | 4.4 | 4.6 |
| 1-5 | 25% by mass | 2769.8 g | 4.3 | 4.3 | 4.3 |
| 1-6 | 20% by mass | 3299.5 g | 3.6 | 3.5 | 3.6 |
| 1-7 | 10% by mass | 3964.1 g | 3.8 | 4.1 | 3.9 |

**Table 5: The percentage of each ingredient used in each Test Sample for hardness test (the unit is % by mass, the total amount of all the ingredients contained in each Sample is considered as 100% by mass)**

| Test Sample For Hardness Test | Processed Starch | Dextrin | Palm Oil (Oil and/or Fat) | Water Content |
|---|---|---|---|---|
| 1-1 | 4.4 | 9.5 | 25.9 | 38.0 |
| 1-2 | 5.0 | 10.8 | 29.4 | 30.2 |
| 1-3 | 5.4 | 11.6 | 31.6 | 25.0 |
| 1-4 | 5.8 | 12.4 | 33.7 | 20.0 |
| 1-5 | 6.4 | 13.8 | 37.7 | 10.4 |
| 1-6 | 4.3 | 9.3 | 25.3 | 40.0 |
| 1-7 | 4.2 | 9.0 | 24.5 | 48.0 |

**Table 6: The percentage of each ingredient used in each Test Sample for hardness test (the unit is % by mass, the total amount of all the ingredients contained in each Sample is considered as 100% by mass)**

| Test Sample for Hardness Test | Glutinous Brown Rice Powder | Common Salt | Citric Acid | Guar Gum |
|---|---|---|---|---|
| 1-1 | 19.0 | 1.1 | 0.2 | 0.4 |
| 1-2 | 22.0 | 1.2 | 0.2 | 0.5 |
| 1-3 | 23.6 | 1.3 | 0.2 | 0.5 |
| 1-4 | 25.2 | 1.4 | 0.2 | 0.6 |
| 1-5 | 28.2 | 1.6 | 0.3 | 0.6 |
| 1-6 | 18.9 | 1.0 | 0.2 | 0.4 |
| 1-7 | 16.4 | 0.9 | 0.1 | 0.4 |

### • Embodiment Sample 1

As a test closer to an embodiment, Embodiment Sample 1 was prepared as follows. Specifically, processed starch as an emulsifier, water (87% by mass relative to the amount (100% by mass) of water used as an ingredient), palm oil as oil and/or fat, and dextrin as an extender were added into a steam kneader (manufactured by Fuji Co., Ltd., FJ-110N2AW) in a ratio shown in Table 7, followed by mixing at 20°C for 10 minutes at 100 rpm to prepare emulsified oil and/or fat. A rice flour (glutinous brown rice powder, manufactured by Gunma Seifun Flour Milling Co., Ltd.) as rice cake, sake lees (sake lees powder, manufactured by Riken Vitamin Co., Ltd., SYUKA NO HANA (registered trademark)) as a fermented food, and water were introduced into the above-described steam kneader in a ratio shown in Table 7, followed by mixing and agitating at 30°C for 1 minute at 38 rpm. Thereafter, heating was performed while kneading using water vapor at a temperature of 100°C in the steam kneader for 12 minutes (the temperature was reached to 100°C after 3 minutes). The water vapor was at 103°C and used under conditions of a pressure of 0.1 MPa, and a flow rate of 120 kg/hour. Thereafter, the introduction of the water vapor was stopped, and flavor was added, then followed by heating while agitating at 85°C for 2 minutes. The obtained mixture was maintained at a low temperature of 10°C for 4 days to obtain a hard cheese-like composition (Embodiment Sample 1), which was the final product. The hard cheese-like composition of Embodiment Sample 1 thus obtained had such hardness that the hard cheese-like composition was able to be shredded (cut into slivers of cheese), and when tested in accordance with the above-described sensory test, the hard cheese-like composition had favorable appearance, mouthfeel, and eating quality.

**Table 7: Embodiment Sample 1**

| Component Name | Classification | Percentage Relative to the Total Amount of Ingredients (% by mass) |
|---|---|---|
| Glutinous Brown Rice Powder | Raw Material of Rice Cake | 18.95 |
| Sake Lees Powder | Fermented Food | 1.68 |
| Powder Condiment (AJIEITO, MC Food Specialties Inc.) | Condiment | 1.68 |
| Common Salt | Condiment | 1.05 |
| Citric Acid | Acidulant | 0.17 |
| Guar Gum | Stabilizer | 0.42 |
| Palm Oil Carotene | Coloring Agent | 0.03 |
| Dextrin | Extender (Emulsified Oil and/or Fat) | 9.05 |
| Processed Starch | Emulsifier (Emulsified Oil and/or Fat) | 4.21 |
| Palm Oil | Oil and/or Fat (Emulsified Oil and/or Fat) | 24.64 |
| Water | Total Amount: Percentage for Emulsified Oil and/or Fat): | 37.90 (Percentage: 87%) |
| Cheese Oil (manufactured by Yokoyama Koryo Limited, Cheese OIl B 1092) | Flavor | 0.18 |
| Cheddar Cheese Oil (manufactured by Yokoyama Koryo Limited, Cheddar Cheese Oil B1518) | Flavor | 0.04 |

## Claims

1. A hard cheese-like composition comprising rice cake and oil and/or fat.

2. The hard cheese-like composition according to claim 1, further comprising a fermented food.

3. The hard cheese-like composition according to claim 1 or 2, wherein
hardness measured by pressing a columnar jig having a test surface having a diameter of 5 mmcp into the hard cheese-like composition is 400 to 6000 g.

4. The hard cheese-like composition according to any one of claims 1 to 3, wherein
the rice cake is rice cake obtained from rice selected from the group consisting of glutinous rice, non-glutinous rice, and mixed rice of these.

5. The hard cheese-like composition according to claim 2, wherein
the fermented food is selected from the group consisting of fermented rice, sake lees, mirin lees, distilled spirit lees, natto, and miso.

6. The hard cheese-like composition according to any one of claims 1 to 5, wherein
the oil and/or fat is sunflower oil, rice oil, or palm oil.

7. A hard cheese-like composition comprising rice and oil and/or fat.

8. A cheese substitute-containing food comprising the hard cheese-like composition according to any one of claims 1 to 7.

9. A method for producing a hard cheese-like composition, comprising:
(2) a step of mixing rice and oil and/or fat;
(3) a step of heating a mixture obtained in the step (2); and
(4) a step of maintaining a mixture obtained in the step (3) at a low temperature.

10. The method for producing a hard cheese-like composition according to claim 9, wherein
the rice in the step (2) is selected from the group consisting of glutinous rice, non-glutinous rice, and mixed rice of these,
the heating in the step (3) is performed at 80 to 120°C for 5 to 30 minutes, and
the maintenance at a low temperature in the step (4) is performed at a temperature of -5°C to 15°C for 1 to 7 days.

11. The method for producing a hard cheese-like composition according to claim 9 or 10, comprising, before the step (2):
(1) a step of preparing a fermented food obtained by fermenting a raw material of the fermented food with a fermenting bacterium, wherein
in the step (2), the fermented food obtained in the step (1) is further mixed.

12. The method for producing a hard cheese-like composition according to any one of claims 9 to 11, wherein
hardness of the hard cheese-like composition measured by pressing a columnar jig having a test surface having a diameter of 5 mmcp into the hard cheese-like composition is 400 to 6000 g.

13. The method for producing a hard cheese-like composition according to any one of claims 9 to 12, wherein
the oil and/or fat is made into emulsified oil and/or fat containing the oil and/or fat, water, and an emulsifier and mixed.

14. The method for producing a hard cheese-like composition according to any one of claims 9 to 13, wherein
the step (4) is a step of maintaining the mixture at a low temperature of -5 to 0°C for 1 to 3 days.

15. The method for producing a hard cheese-like composition according to claim 11, wherein
the fermented food is selected from the group consisting of fermented rice, sake lees, mirin lees, distilled spirit lees, natto, and miso.

16. The method for producing a hard cheese-like composition according to any one of claims 9 to 15, wherein
the oil and/or fat is sunflower oil, rice oil, or palm oil.
